# EUROPEAN PATENT SPECIFICATION

(11) **EP 0 892 024 B1**
(45) Date of publication and mention of the grant of the patent: **09.10.2002**
(21) Application number: 98113289.7
(22) Date of filing: 16.07.1998
(51) Int. Cl.: C09D 11/00, B41M 5/00, B41M 7/00

(54) **Ink jet recording method**
Tintenstrahlaufzeichnungsverfahren
Procédé d'enregistrement par jet d'encre

(30) Priority: 16.07.1997 JP 19091297
(43) Date of publication of application: 20.01.1999
(73) Proprietor: SEIKO EPSON CORPORATION, Shinjuku-ku Tokyo-to (JP)
(72) Inventor: Sano, Tsuyoshi, Suwa-shi, Nagano-ken (JP)
(74) Representative: Grünecker, Kinkeldey, Stockmair & Schwanhäusser Anwaltssozietät

(56) References cited:
- EP-A- 0 511 804
- EP-A- 0 697 445
- EP-A- 0 739 743

## Description

The present invention relates to an ink jet recording method, and more particularly to an ink jet recording method wherein a reaction solution and an ink composition are deposited onto a recording medium to conduct printing.

Ink jet recording is a printing method wherein droplets of an ink composition are ejected and deposited onto a recording medium such as paper to conduct printing. This method has a feature that an image having high resolution and quality can be printed at a high speed by means of a relatively inexpensive apparatus. In general, the ink composition used in the ink jet recording comprises water as a main component and, added thereto, a colorant and a wetting agent, such as glycerin, for preventing clogging.

Regarding the ink jet recording method, the application of a polyvalent metallic salt solution onto a recording medium followed by the application of an ink composition containing a dye having at least one carboxyl group has been recently proposed (for example, Japanese Patent Laid-Open No. 202328/1993). The claimed advantage of this method is that the polyvalent metal ion combines with the dye to form an insoluble complex, the presence of which can offer an image having waterfastness and high quality free from color bleeding.

Further, the use of a color ink comprising at least a surfactant for imparting a penetrating property or a solvent having a penetrating property and a salt in combination with a black ink capable of being thickened or agglomerated through the action of the salt has been proposed to yield a high-quality color image having a high image density and free from color bleeding (Japanese Patent Laid-Open No. 106735/1994). The ink jet recording method uses two liquids, a first solution containing a salt and an ink composition to yield a good image.

Ink jet recording methods involving printing of two liquids are disclosed also in, for example, Japanese Patent Laid-Open Nos. 240557/1991 and 240558/1991.

The present inventors have now found that the use of an ink composition containing a water-soluble resin dispersant having an acid value of 100 to 300 in an ink jet recording method involving printing of such two liquids can realize a good image, especially an image free from color bleeding and having high color density. The present invention has been made based on such a finding.

Accordingly, an object of the present invention is to provide an ink jet recording method, involving printing of two liquids, that can realize a good image.

According to one aspect of the present invention, there is provided an ink jet recording method comprising the step of depositing a reaction solution and an ink composition on a recording medium to conduct printing,
the reaction solution comprising a polyvalent metal salt,
the ink composition comprising at least a pigment, a water-soluble resin dispersant having an acid value of 100 to 300, and an aqueous solvent.
Fig. 1 is a diagram showing an ink jet recording apparatus usable in practicing the method according to the present invention, wherein a recording head is provided separately from an ink tank, and an ink composition and a reaction solution are fed into the recording head through an ink tube;
Fig. 2 is an enlarged view of the surface of nozzles for a recording head, wherein 1b designates a nozzle plate for a reaction solution and 1c a nozzle plate for an ink composition;
Fig. 3 is a diagram illustrating ink jet recording using the recording head shown in Fig. 2, wherein a reaction solution and an ink composition deposit on region 31 and region 32, respectively;
Fig. 4 is a diagram showing another embodiment of the recording head, wherein all ejection nozzles are arranged in lateral direction; and
Fig. 5 is a diagram showing an ink jet recording apparatus usable in practicing the method according to the present invention, wherein a recording head is integral with an ink tank.

### Ink jet recording method

The ink jet recording method according to the present invention comprises the step of printing a reaction solution and an ink composition on a recording medium.

According to the ink jet recording method of the present invention, good printing can be realized by bringing a reaction solution into contact with an ink composition. Without intending to be bound by theory, it is believed that good printing can be achieved as follows. Upon contact of the reaction solution with the ink composition, the polyvalent metal ion contained in the reaction solution breaks the state of dispersion of a colorant and other ingredients contained in the ink composition, resulting in agglomeration of these ingredients. It is believed that the resultant agglomerates inhibits the penetration of the colorant into the recording medium. Further, according to the present invention, the ink composition contains a water-soluble resin dispersant having an acid value of 100 to 300. It is believed that the dispersant accelerates the production of the agglomerate. This results in the formation of an image having high color density and free from feathering and uneven printing. Further, in a color image, uneven color mixing in boundaries of different colors, that is, color bleeding, can also be advantageously prevented.

The reaction solution and the ink composition may be deposited on a recording medium in any sequence. Any of the following methods may be suitably used: a method wherein a reaction solution is deposited onto a recording medium followed by deposition of an ink composition onto the recording medium with the reaction solution deposited thereon, a method wherein an ink composition is printed followed by deposition of the reaction solution, and a method wherein a reaction solution and an ink composition are mixed together immediately before or immediately after ejection thereof.

The deposition of the reaction solution onto the recording medium may be carried out by any of an embodiment where the reaction solution is selectively deposited on only an area where the ink composition is to be deposited and an embodiment where the reaction solution is deposited on the whole surface of paper. The former embodiment can minimize the consumption of the reaction solution and, hence, is cost-effective. In this embodiment, however, an accuracy is required to some extent with respect to the position where both the reaction solution and the ink composition are deposited. On the other hand, for the latter embodiment, the requirement for the accuracy of the position where the reaction solution and the ink composition are deposited is relaxed as compared with the former embodiment. In this embodiment, however, since the reaction solution is deposited in a large amount on the whole surface of paper, the paper is likely to cause curling during drying. The selection of the embodiment among the two above may be determined by taking properties of the ink composition with the reaction solution into consideration. In the case of the former embodiment, the deposition of the reaction solution can be performed by ink jet recording.

As described below, the reaction solution may contain a colorant so as to function also as an ink composition.

### Ink composition

The ink composition used according to the present invention comprises at least a colorant, a water-soluble resin dispersant having an acid value of 100 to 300, and an aqueous solvent.

### Water-soluble dispersant

The ink composition used in the present invention contains a water-soluble resin dispersant having an acid value of 100 to 300, preferably 100 to 250. Use of the ink composition containing a water-soluble resin dispersant having an acid value falling within the range can realize a better image. In particular, in a color image, color bleeding can be effectively prevented, realizing an image having higher color density.

In the present invention, the acid value of the water-soluble resin dispersant refers to the amount (mg) of KOH necessary for the neutralization of the resin.

The amount of the water-soluble resin dispersant added in terms of the weight ratio of the pigment to the water-soluble resin dispersant is preferably 1 : 0.05 to 3, more preferably 1 : 0.1 to 1.

The water-soluble resin dispersant having an acid value of 100 to 300 may be properly selected from conventional water-soluble resin dispersants or water-soluble resin dispersants known therefrom. A preferred example thereof is a polymer comprising at least one monomer selected from the group consisting of styrene, acrylic acid, acrylonitrile, potassium acrylate, vinyl acetate, acrylic ester, methacrylic acid, α-methylstyrene, maleic anhydride, fatty acid vinylethylene, and maleic ester.

### Colorant

The colorant contained in the ink composition used in the present invention may be any of dyes and pigments. In the present invention, a very wide variety of colorants may be utilized as described above.

Dyes usable herein include various dyes commonly used in ink jet recording, such as direct dyes, acid dyes, foodstuff dyes, basic dyes, reactive dyes, disperse dyes, vat dyes, soluble vat dyes, and reactive disperse dyes.

Inorganic pigments or organic pigments may be used without any particular limitation. Inorganic pigments usable herein include, in addition to titanium oxide and iron oxide, carbon blacks produced by known processes, such as contact, furnace, and thermal processes. Examples of the organic pigments usable herein include azo pigments (including azo lake, insoluble azo pigment, condensed azo pigment, and chelate azo pigment), polycyclic pigments (for example, phthalocyanine, perylene, perinone, anthraquinone, quinacridone, dioxazine, thioindigo, isoindolinone, and quinophthalone pigments), dye chelates (for example, basic dye chelates and acid dye chelates), nitro pigments, nitroso pigments, and aniline black.

According to a preferred embodiment of the present invention, the pigment is preferably added, to the ink, in the form of a pigment dispersion prepared by dispersing the pigment in an aqueous medium with the aid of a dispersant. According to the present invention, as described above, a water-soluble dispersant having an acid value of 100 to 300 is added. In addition to the water-soluble dispersant, a dispersant commonly used in the preparation of a dispersion of a pigment, for example, a polymeric dispersant or a surfactant, may be used.

The amount of the pigment added to the ink composition is preferably 0.5 to 25% by weight, more preferably 2 to 15% by weight.

### Aqueous solvent

The aqueous solvent as the base solvent for the ink composition used according to the present invention comprises an aqueous organic solvent and water.

The aqueous organic solvent is preferably a low-boiling organic solvent. Preferred examples of low-boiling organic solvents usable herein include methanol, ethanol, n-propyl alcohol, iso-propyl alcohol, n-butanol, sec-butanol, tert-butanol, iso-butanol, and n-pentanol. Monohydric alcohols are particularly preferred. The low-boiling organic solvent has the effect of shortening the time taken for drying the ink.

According to a preferred embodiment of the present invention, the aqueous solvent may further comprise a wetting agent comprising a high-boiling organic solvent. Preferred examples of high-boiling organic solvents usable herein include: polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, and triethylene glycol monoethyl ether, and triethylene glycol monobutyl ether; urea, 2-pyrrolidone, N-methyl-2-pyrrolidone, 1,3-dimethyl-2-imidazolidinone, and triethanolamine.

The amount of the wetting agent added is preferably 0.5 to 40% by weight, more preferably 2 to 20% by weight, based on the ink. The amount of the low-boiling organic solvent added is preferably 0.5 to 10% by weight based on the ink, more preferably 1.5 to 6% by weight.

### Other ingredients

According to a preferred embodiment of the present invention, the ink composition used in the present invention comprises a resin emulsion. The resin emulsion, which may be preferably used in the present invention, refers to an emulsion comprising water as a continuous phase and a resin component as a dispersed phase. Resin components usable in the resin emulsion include acrylic resin, vinyl acetate resin, styrene/butadiene resin, vinyl chloride resin, (meth)acrylate/styrene resin, butadiene resin, and styrene resin.

Commercially available resin emulsions may also be used, and examples thereof include Microgel E-1002 and E-5002 (styrene/acrylic resin emulsion, manufactured by Nippon Paint Co., Ltd.), Voncoat 4001 (acrylic resin emulsion, manufactured by Dainippon Ink and Chemicals, Inc.), Voncoat 5454 (styrene/acrylic resin emulsion, manufactured by Dainippon Ink and Chemicals, Inc.), SAE-1014 (styrene/acrylic resin emulsion, manufactured by Nippon Zeon Co., Ltd.), and Saivinol SK-200 (acrylic resin emulsion, manufactured by Saiden Chemical Industry Co., Ltd).

According to a preferred embodiment of the present invention, the resin is a polymer having a combination of a hydrophilic segment with a hydrophobic segment. The particle diameter of the resin component is not particularly limited so far as the resin component can form an emulsion. It, however, is preferably not more than 150 nm, more preferably 5 to 100 nm.

The resin emulsion may be prepared by adding a surfactant and water to a polymer, prepared by polymerization, to emulsify the polymer, or by emulsion polymerization of a monomer in the presence of a surfactant in water. For example, an acrylic resin emulsion or a styrene/acrylic resin emulsion may be prepared by subjecting an ester of (meth)acrylic acid or alternatively an ester of (meth)acrylic acid in combination with styrene to emulsion polymerization in the presence of an emulsifier, such as a surfactant. In general, the mixing ratio of the resin component to the surfactant is preferably 10 : 1 to 5 : 1. When the amount of the surfactant used falls within the range, it is possible to provide an ink which has good waterfastness in the form of an image and good penetrability. The surfactant is not particularly limited. Preferred examples thereof include anionic surfactants (for example, alkylsulfates, alkylallylsulfonates, dialkyl succinates, and alkylnaphthalenesulfonates); and nonionic surfactants having an HLB value of not less than 10 (for example, polyoxyethylene alkyl ethers, polyoxyethylene alkylallyl ethers). They may be used alone or as a mixture of two or more.

The ratio of the resin as the component constituting the dispersed phase to water is such that the amount of water is suitably 60 to 400 parts by weight, preferably 100 to 200 parts by weight, based on 100 parts by weight of the resin.

In the ink composition used in the present invention, the amount of the resin emulsion incorporated therein is preferably such that the amount of the resin component is in the range of from 0.1 to 40% by weight, more preferably in the range of from 1 to 25% by weight, based on the ink composition.

According to a preferred embodiment of the present invention, the ink composition used in the present invention may further comprise an inorganic oxide colloid (also called "inorganic oxide sol"). In the present invention, the inorganic oxide colloid refers to a colloidal solution comprising: a dispersion medium composed of water or water and an organic solvent having good compatibility with water; and a dispersoid composed of ultrafine particles of an inorganic oxide. Inorganic oxides usable herein include high-molecular weight silicic anhydride (SiO₂) and alumina (Al₂O₃). The particle diameter of the ultrafine particles of the inorganic oxide is generally 1 to 100 nm, preferably 1 to 20 nm, more preferably 1 to 10 nm. The dispersion medium for the inorganic oxide colloid is generally water or a mixed solvent composed of water and an organic solvent having good compatibility with water, for example, methanol, ethanol, isopropyl alcohol, or n-propanol. The inorganic oxide colloid is prepared by dispersing ultrafine particles of the inorganic oxide into water or the organic solvent. A dispersion of the ultrafine particles of the inorganic oxide in water is called an "aqueous sol," and a dispersion of the ultrafine particles of the inorganic oxide in an organic solvent is called an "organosol."

It is preferable that the inorganic oxide colloid interacts with the polyvalent metal salt to cause agglomeration.

The inorganic oxide colloid may be a commercially available one, and specific examples thereof include: Snowtex S, Snowtex N, Snowtex C, Snowtex SS, Snowtex XS, Snowtex 20, Snowtex 30, and Snowtex 40, manufactured by Nissan Chemical Industry Ltd., Cataloid SI-350, Cataloid SI-500, Cataloid SI-30, Cataloid S-20L, Cataloid S-20H, Cataloid S-30L, Cataloid S-30H, and Cataloid SI-40, manufactured by E. I. du Pont de Nemours & Co.), which are dispersions of ultrafine particles of high-molecular weight silicic anhydride in water; Aluminasol 100, Aluminasol 200, and Aluminasol 520, manufactured by Nissan Chemical Industry Ltd., which are dispersions of ultrafine particles of alumina in water; and OSCAL-1432 (isopropyl alcohol sol, manufactured by Catalysts and Chemicals Industries Co., Ltd.) which is a dispersion of ultrafine particles of high-molecular weight silicic anhydride in an organic solvent. Most of the commercially available colloidal solutions of inorganic oxides have pH adjusted to the acidic or alkaline. This is because the pH region where the inorganic oxide colloid exists stably in the dispersed state is on the acidic or alkaline side. Therefore, when the addition of a commercially available inorganic oxide colloidal solution to the ink is contemplated, it should be made by taking into consideration the pH region, where the inorganic oxide colloid exists stably in the dispersed state, and the pH value of the ink.

The amount of the inorganic oxide colloid added may be suitably determined by taking into consideration the type and the agglomerate of the inorganic oxide. However, for example, it is preferably 0.1 to 15% by weight, more preferably 0.5 to 5.0% by weight, based on the ink composition. A plurality of inorganic oxide colloids may be added.

According to a preferred embodiment of the present invention, the ink composition used in the present invention comprises a saccharide. The addition of the saccharide can further improve the color density, minimizing feathering and uneven printing. Further, in the case of a color image, color bleeding can be prevented on a high level. Specific examples of saccharides usable herein include monosaccharides, disaccharides, oligosaccharides (including trisaccharides and tetrasaccharides), and other polysaccharides, preferably glucose, mannose, fructose, ribose, xylose, arabinose, galactose, aldonic acid, glucitol, sorbitol, maltose, cellobiose, lactose, sucrose, trehalose, maltotriose, and maltitol. The term "polysaccharide" used herein means saccharides in the broad sense as including substances which exist widely in the world of nature, such as alginic acid, α-cyclodextrin, and cellulose.

Derivatives of these saccharides usable herein include reducing sugars of the saccharides (for example, sugar alcohols represented by the general formula HOCH₂(CHOH)ₙCH₂OH, wherein n is an integer of 2 to 5), oxidizing sugars (for example, aldonic acid or uronic acid), amino acids, and thiosugars. Among them, sugar alcohols are particularly preferred, and specific examples thereof include maltitol and sorbitol.

The content of the saccharide is suitably 0.1 to 40% by weight, preferably 0.5 to 30% by weight, based on the ink composition.

The ink composition used in the present invention may further comprise a surfactant. Surfactants usable herein include anionic, cationic, and amphoteric surfactants; alcohols such as methanol, ethanol, and iso-propyl alcohol; and lower alkyl ethers of polyhydric alcohols, such as ethylene glycol monomethyl ether, diethylene glycol monoethyl ether, diethylene glycol monobutyl ether, triethylene glycol monobutyl ether, propylene glycol monobutyl ether, and dipropylene glycol monobutyl ether.

If necessary, pH adjusters, preservatives, antimolds and the like may be added to the ink composition used in the present invention. pH adjustors usable herein include potassium hydroxide, sodium hydroxide, and triethanolamine.

### Reaction solution

The reaction solution used in the present invention comprises a polyvalent metal salt.

Preferred examples of the polyvalent metal salt include those which are constituted by divalent or higher polyvalent metallic ions and anions bonded to the polyvalent metallic ions and are soluble in water. Specific examples of polyvalent metal ions include divalent metallic ions, such as Ca²⁺, Cu²⁺, Ni²⁺, Mg²⁺, Zn²⁺, and Ba²⁺, and trivalent metallic ions, such as Al³⁺, Fe³⁺, and Cr³⁺. Anions include Cl⁻, NO₃⁻, I⁻, Br⁻, ClO₃⁻, and CH₃COO⁻.

A metal salt constituted by the Ca²⁺ or Mg²⁺ provides favorable results in terms of pH of the reaction solution and the quality of prints.

The concentration of the polyvalent metal salt in the reaction solution may be suitably determined so as to attain the effect of providing a good print quality and preventing clogging. It, however, is preferably 0.1 to 40% by weight, more preferably 5 to 25% by weight.

According to a preferred embodiment of the present invention, the polyvalent metal salt contained in the reaction solution may comprise a divalent or higher polyvalent metal ion and a nitrate ion or a carboxylate ion bonded to the polyvalent metal ion, and is soluble in water.

More preferably, the carboxylate ion is derived from a saturated aliphatic monocarboxylic acid having 1 to 6 carbon atoms and a carbocyclic monocarboxylic acid having 7 to 11 carbon atoms. Preferred examples of the saturated aliphatic monocarboxylic acid having 1 to 6 carbon atoms include formic acid, acetic acid, propionic acid, butyric acid, isobutyric acid, valeric acid, isovaleric acid, pivalic acid, and hexanoic acid. Among them, formic acid and acetic acid are particularly preferred.

A hydrogen atom(s) on the saturated aliphatic hydrocarbon residue in the monocarboxylic acid may be substituted by a hydroxyl group. Preferred examples of such carboxylic acids include lactic acid.

Preferred examples of the carbocyclic monocarboxylic acid having 6 to 10 carbon atoms include benzoic acid and naphthoic acid with benzoic acid being more preferred.

According to a preferred embodiment of the present invention, the reaction solution comprises a wetting agent, such as a high-boiling organic solvent. The high-boiling organic solvent functions to prevent the reaction solution from drying out, thereby preventing clogging of the head. Preferred examples of high-boiling organic solvents usable herein, some of which are described above in connection with the polyol, include: polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, and triethylene glycol monoethyl ether, and triethylene glycol monobutyl ether; urea, 2-pyrrolidone, N-methyl-2-pyrrolidone, 1,3-dimethyl-2-imidazolidinone, and triethanolamine.

Although the amount of the high-boiling organic solvent added is not particularly limited, it is preferably 0.5 to 40% by weight, more preferably 2 to 20% by weight.

According to a preferred embodiment of the present invention, the reaction solution may further comprises a low-boiling organic solvent. Examples of preferred low-boiling organic solvents usable herein include methanol, ethanol, n-propyl alcohol, iso-propyl alcohol, n-butanol, sec-butanol, tert-butanol, iso-butanol, and n-pentanol. Monohydric alcohols are particularly preferred. The low-boiling organic solvent has the effect of shortening the time taken for drying the ink composition. The amount of the low-boiling organic solvent added is preferably 0.5 to 10% by weight, more preferably 1.5 to 6% by weight.

According to a preferred embodiment, the reaction solution may further comprise a penetrating agent. Penetrating agents usable herein include surfactants such as anionic, cationic, and amphoteric surfactants; alcohols such as methanol, ethanol, and iso-propyl alcohol; and lower alkyl ethers of polyhydric alcohols, such as ethylene glycol monomethyl ether, diethylene glycol monoethyl ether, diethylene glycol monobutyl ether, triethylene glycol monobutyl ether, propylene glycol monobutyl ether, and dipropylene glycol monobutyl ether.

### Ink jet recording apparatus

An ink jet recording apparatus for carrying out the ink jet recording method according to the present invention will be described with reference to the accompanying drawings.

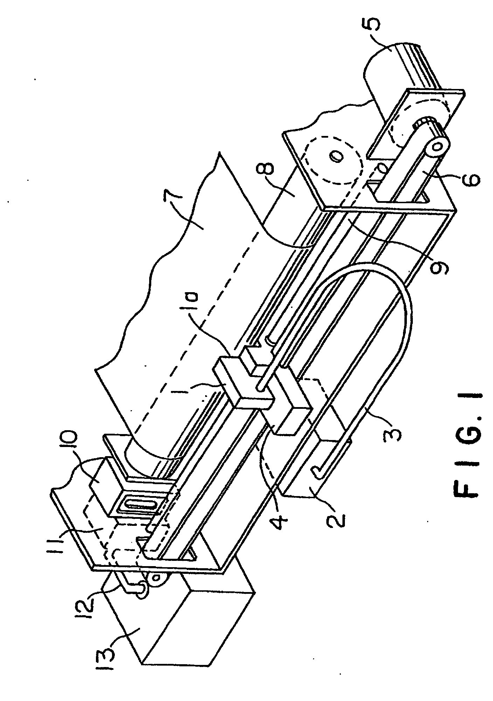

Fig. 1 is a diagram showing an embodiment of an ink jet recording apparatus. In this embodiment, an ink composition and a reaction solution are accommodated in a tank and fed into a recording head through an ink tube. Thus, a recording head 1 is communicated with an ink tank 2 through an ink tube 3. The interior of the ink tank 2 is partitioned, and a chamber for an ink composition, optionally a plurality of chambers respectively for a plurality of color ink compositions, and a chamber for a reaction solution are provided.

The recording head 1 is moved along a carriage 4 by means of a timing belt 6 driven by a motor 5. Paper 7 as a recording medium is placed by a platen 8 and a guide 9 at a position facing the recording head 1. In this embodiment, a cap 10 is provided. A suction pump 11 is connected to the cap 10 in order to conduct the so-called "cleaning operation." The ink composition sucked by the suction pump 11 is resorvoired in a waste ink tank 13 through a tube 12.

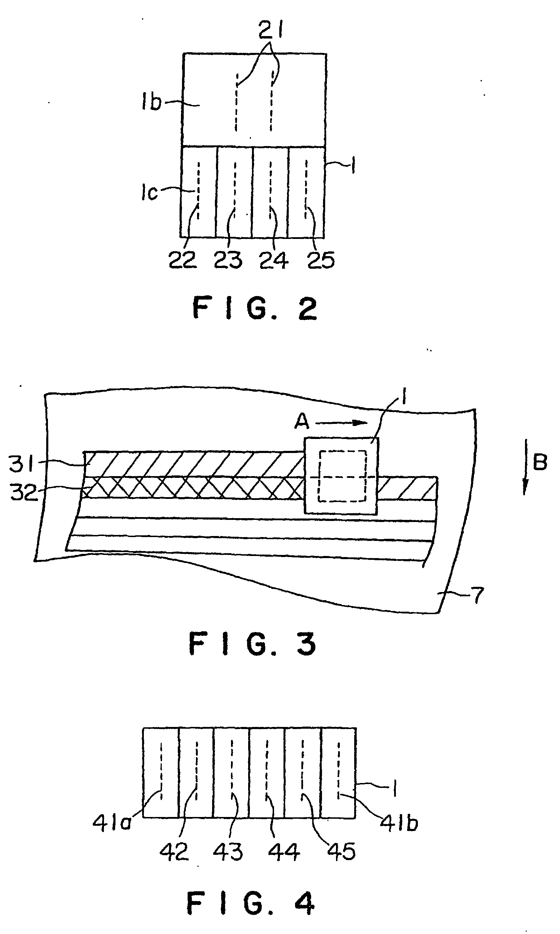

Fig. 2 is an enlarged view showing the surface of nozzles for the recording head 1. In the drawing, the nozzle plate for a reaction solution is indicated by 1b, and nozzles 21 for ejecting the reaction solution is provided in the longitudinal direction. On the other hand, the nozzle plate for the ink composition is indicated by 1c, and a yellow ink composition, a magenta ink composition, a cyan ink composition, and a black ink composition are ejected respectively through nozzles 22, 23, 24 and 25.

Further, an ink jet recording method using the recording head shown in Fig. 2 will be described with reference to Fig. 3. The recording head 1 is moved in the direction indicated by an arrow A, during which time the reaction solution is ejected through the nozzle surface 1b to form a reaction solution-deposited region 31 in a band form on the recording medium 7. Subsequently, the recording medium 7 is transferred by a predetermined extent in the paper feed direction indicated by an arrow B, during which time the recording head 1 is moved in the direction opposite to that indicated by the arrow A in the drawing and returned to the left end of the recording medium 7, and the recording head 1 conducts printing using the ink composition on the reaction solution-deposited region, thereby forming a print region 32.

Further, as shown in Fig. 4, in the recording head 1, it is also possible to arrange all nozzles in the lateral direction to construct a nozzle assembly. In the drawing, ejection nozzles for a reaction solution are denoted by 41a and 41b, and a yellow ink composition, a magenta ink composition, a cyan ink composition, and a black ink composition are ejected respectively through nozzles 42, 43, 44 and 45. In the recording head according to this embodiment, the recording head 1, when reciprocated on the carriage, can conduct printing in both directions. Therefore, in this case, printing at a higher speed is expected as compared with the case where the recording head shown in Fig. 2 is used.

Regulating the composition of the reaction solution and the ink composition enables a high-quality print to be stable provided independently of the order of depositing the reaction solution and the ink composition. In this case, use of only one ejection nozzle for the reaction solution suffices for desired results (for example, the nozzle indicated by numeral 41b in the drawing may be omitted), leading to a further reduction in size and an increase in printing speed.

In the ink jet recording apparatus, the supplement of the ink composition may be carried out by replacing a cartridge as an ink tank. The ink tank may be integral with the recording head.

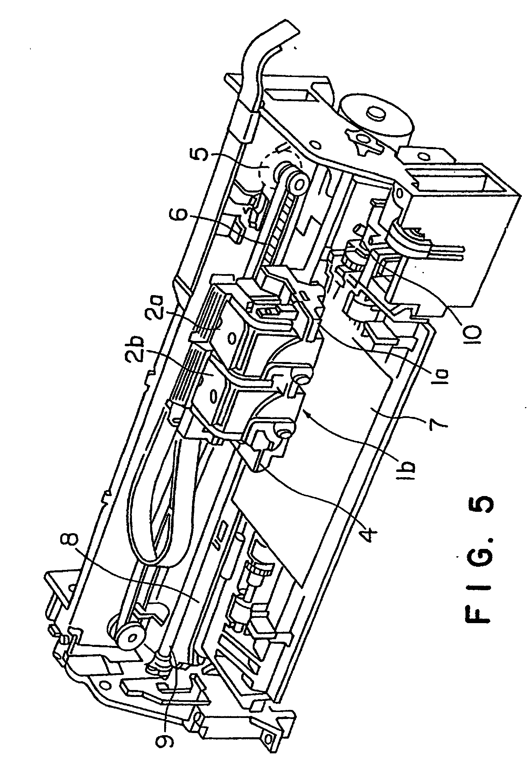

A preferred embodiment of an ink jet recording apparatus using such an ink tank is shown in Fig. 5. In the drawing, the same members as used in the apparatus shown in Fig. 1 have the same reference numerals. In the embodiment shown in Fig. 5, recording heads 1a and 1b are integral respectively with ink tanks 2a and 2b. An ink composition and a reaction solution are ejected respectively through the recording heads 1a and 1b. Basically, printing may be conducted in the same manner as described above in connection with the apparatus shown in Fig. 1. Further, in this embodiment, the recording head 1a is moved together with the ink tank 2a on a carriage 4, while the recording head 1b is moved together with the ink tank 2b on the carriage 4.

### EXAMPLES

The following examples further illustrate the present invention.

In the following examples, all "%" are by weight unless otherwise specified.

### Preparation of ink compositions

Black inks 1 to 4 having the following respective compositions were prepared as follows. At the outset, a pigment and a dispersant (styrene/acrylic acid copolymer) were mixed together, and the mixture, together with glass beads (diameter: 1.7 mm, amount: 1.5 times (by weight) larger than the mixture), was dispersed for 2 hr in a sand mill (manufactured by Yasukawa Seisakusho). Thereafter, the glass beads were removed, the other additives were added, and the mixture was stirred at room temperature for 20 min. The mixture was filtered through a 5 µm membrane filter to prepare an ink for ink jet recording.

### Black ink 1

| | |
|---|---|
| Carbon black MA7 (manufactured by Mitsubishi Chemical Corp.) | 5% |
| Styrene/acrylic acid copolymer (acid value 100) | 1% |
| Sucrose | 0.7% |
| Maltitol | 6.3% |
| Glycerin | 10% |
| 2-Pyrrolidone | 2% |
| Ethanol | 4% |
| Pure water | Balance |

### Black ink 2

| | |
|---|---|
| Carbon black Raven 1080 | 5% |
| Styrene/acrylic acid copolymer (acid value 210) | 1% |
| Sucrose | 0.7% |
| Maltitol | 6.3% |
| Glycerin | 10% |
| 2-Pyrrolidone | 2% |
| Ethanol | 4% |
| Pure water | Balance |

### Black ink 3

| | |
|---|---|
| Carbon black Raven 1080 | 5% |
| Styrene/acrylic acid copolymer (acid value 130) | 1% |
| Sucrose | 0.7% |
| Maltitol | 6.3% |
| Glycerin | 10% |
| 2-Pyrrolidone | 2% |
| Ethanol | 4% |
| Pure water | Balance |

### Black ink 4

| | |
|---|---|
| Carbon black Raven 1080 | 5% |
| Styrene/acrylic acid copolymer (acid value 80) | 1% |
| Sucrose | 0.7% |
| Maltitol | 6.3% |
| Glycerin | 10% |
| 2-Pyrrolidone | 2% |
| Ethanol | 4% |
| Pure water | Balance |

### Color ink set

A cyan ink composition, a magenta ink composition, and a yellow ink composition were prepared in the same manner as described above in connection with the preparation of the black ink, except that any one of the following pigment was used as the colorant.

### Pigment

| | |
|---|---|
| Cyan ink | |
| Pigment KETBLUEEX-1 (manufactured by Dainippon Ink and Chemicals, Inc.) | 2% |
| Magenta ink | |
| Pigment KETRED 309 | 2% |
| Yellow ink | |
| Pigment KETYELLOW 403 | 2% |

### Liquid medium

| | |
|---|---|
| Styrene/acrylic acid copolymer (acid value 160) | 0.7% |
| Sucrose | 0.7% |
| Maltitol | 6.3% |
| Glycerin | 10% |
| 2-Pyrrolidone | 2% |
| Ethanol | 4% |
| Pure water | Balance |

### Preparation of reaction solution

The following ingredients were stirred and mixed together for 20 min, and the mixture was filtered through a 5-µm membrane filter to prepare a reaction solution.

The following reaction solution 3 was prepared by dissolving a dye in a liquid medium so that it could serve both as a reaction solution and an ink composition.

### Reaction solution 1

| | |
|---|---|
| Magnesium nitrate hexahydrate | 25% |
| Glycerin | 20% |
| Triethylene glycol monobutyl ether | 10% |
| Pure water | Balance |

### Reaction solution 2

| | |
|---|---|
| Calcium chloride | 10% |
| Diethylene glycol | 10% |
| Pure water | Balance |

### Reaction solution 3

### Dye

| | |
|---|---|
| Cyan ink | |
| C.I. Acid Blue 9 | 3% |
| Magenta ink | |
| C.I. Acid Red 289 | 3% |
| Yellow ink | |
| C.I. Acid Yellow 23 | 3% |

### Liquid medium

| | |
|---|---|
| Calcium chloride | 10% |
| Glycerin | 10% |
| Pure water | Balance |

### Evaluation test

The above ink compositions and reaction solutions were used in the following combinations to carry out printing of images. The printing was carried out using an ink jet printer MJ-930C (manufactured by Seiko Epson Corp.) at a density of 300 dpi x 360 dpi with the amount of the ink ejected per dot being 0.040 µg.
Example 1: black ink 1 and reaction solution 1
Example 2: black ink 2 and reaction solution 2
Example 3: black ink 3 and reaction solution 1
Example 4: black ink 1 and color ink set and reaction solution 2
Example 5: black ink 2 and reaction solution 3
Comparative Example 1: black ink 4 and reaction solution 3
Comparative Example 2: black ink 2 and color ink (reaction solution not used)

### Evaluation 1: Print density (OD value)

A black ink was printed on the following evaluation papers, and the reflection OD value of the print was measured with Machbeth PCMII (manufactured by Machbeth). The results were expressed in terms of OD value for each paper and shown in the following table.
1. Xerox P Paper (Xerox Corp.)
2. Ricopy 6200 Paper (Ricoh Co. Ltd.)
3. Xerox 4024 Paper (Xerox Corp.)
4. Neenah Bond Paper (Kimberly-Clark)
5. Xerox R Paper (Xerox Corp., recycled paper)
6. Yamayuri paper (Honshu Paper Co., Ltd., recycled paper)
   A: Average of OD values for six papers being not less than 1.3
   B: Average of OD values for six papers being 1.2 to less than 1.3
   NG: Average of OD values for six papers being less than 1.2

### Evaluation 2: Color bleeding

A reaction solution was printed over the whole surface of the test papers (100% duty), and color inks (cyan, magenta, and yellow) (100% duty) and the black ink (a letter) were simultaneously printed to examine the prints for the presence of uneven color-to-color mixing in the letter boundaries. In Example 5, since the reaction solution was a color ink, the reaction solution (100% duty) and the black ink (a letter) were simultaneously printed.

The results were as summarized in the following table.
A: For all test papers, no color-to-color mixing observed with clear letter boundaries
B: For some papers, feather-like color-to-color mixing observed along paper fibers
NG: For all the test papers, significant color-to-color mixing observed rendering the outline of the letter blurry

**Table 1**

| | Evaluation 1 | Evaluation 2 |
|---|---|---|
| Example 1 | A | ― |
| Example 2 | A | ― |
| Example 3 | A | ― |
| Example 4 | A | A |
| Example 5 | A | A |
| Comparative Example 1 | B | B |
| Comparative Example 2 | NG | NG |

## Claims

1. An ink jet recording method comprising the step of depositing a reaction solution and an ink composition on a recording medium,
the reaction solution comprising a polyvalent metal salt,
the ink composition comprising at least a pigment, a water-soluble resin dispersant having an acid value of 100 to 300, and an aqueous solvent.

2. The ink jet recording method according to claim 1,
wherein the water-soluble resin dispersant is a polymer comprising at least one monomer selected from the group consisting of styrene, acrylic acid, acrylonitrile, potassium acrylate, vinyl acetate, acrylic ester, methacrylic acid, α-methylstyrene, maleic anhydride, fatty acid vinylethylene, and maleic ester.

3. The ink jet recording method according to claim 1 or 2, wherein the ink composition further comprises a resin emulsion.

4. The ink jet recording method according to any one of claims 1 to 3, wherein the ink composition further comprises an inorganic oxide colloid.

5. The ink jet recording method according to claim 1, wherein the polyvalent metal salt is a salt of nitric acid or a salt of a carboxylic acid.

6. The ink jet recording method according to claim 1, wherein the reaction solution is first deposited onto the recording medium and then the ink composition is deposited onto the recording medium.

7. The ink jet recording method according to claim 1, wherein the ink composition is first deposited onto the recording medium and then the reaction solution is deposited onto the recording medium.

8. A recorded medium obtained by the method according to any one of claims 1 to 7.

## Patentansprüche

1. Tintenstrahlaufzeichnungsverfahren, umfassend das Aufbringen einer Reaktionslösung und einer Tintenzusammensetzung auf einem Aufzeichnungsmedium, wobei die Reaktionslösung ein Salz eines mehrwertigen Metalls umfasst und wobei die Tintenzusammensetzung mindestens ein Pigment, ein wasserlösliches harzartiges Dispergiermittel mit einer Säurezahl im Bereich von 100 bis 300 und ein wässriges Lösungsmittel umfasst.

2. Tintenstrahlaufzeichnungsverfahren nach Anspruch 1, wobei das wasserlösliche harzartige Dispergiermittel ein Polymer ist, umfassend mindestens eine Monomereinheit, abgeleitet von Monomeren, ausgewählt aus der Gruppe, bestehend aus Styrol, Acrylsäure, Acrylnitril, Kaliumacrylat, Vinylacetat, Acrylsäureestern, Methacrylsäure, α-Methylstyrol, Maleinsäureanhydrid, Fettsäurevinylethylenverbindungen und Maleinsäureestern.

3. Tintenstrahlaufzeichnungsverfahren nach Anspruch 1 oder 2, wobei die Tintenzusammensetzung weiterhin eine Harzemulsion umfasst.

4. Tintenstrahlaufzeichnungsverfahren nach einem der Ansprüche 1 bis 3, wobei die Tintenzusammensetzung weiterhin ein Kolloid eines anorganischen Oxids umfasst.

5. Tintenstrahlaufzeichnungsverfahren nach Anspruch 1, wobei das Salz eines mehrwertigen Metalls ein Salz der Salpetersäure oder ein Salz einer Carbonsäure ist.

6. Tintenstrahlaufzeichnungsverfahren nach Anspruch 1, wobei die Reaktionslösung zuerst auf dem Aufzeichnungsmedium aufgebracht wird und dann die Tintenzusammensetzung auf dem Aufzeichnungsmedium aufgebracht wird.

7. Tintenstrahlaufzeichnungsverfahren nach Anspruch 1, wobei die Tintenzusammensetzung zuerst auf dem Aufzeichnungsmedium aufgebracht wird und dann die Reaktionslösung auf dem Aufzeichnungsmedium aufgebracht wird.

8. Bedrucktes Medium, erhalten mit dem Verfahren nach einem der Ansprüche 1 bis 7.

## Revendications

1. Procédé d'enregistrement à jet d'encre comprenant l'étape consistant à déposer une solution réactive et une composition d'encre sur un support d'enregistrement, la solution réactive comprenant un sel de métal polyvalent, la composition d'encre comprenant au moins un pigment, un dispersant de résine hydrosoluble ayant un indice d'acide de 100 à 300, et un solvant aqueux.

2. Procédé d'enregistrement à jet d'encre selon la revendication 1, dans lequel le dispersant de résine hydrosoluble est un polymère comprenant au moins un monomère choisi dans le groupe formé du styrène, de l'acide acrylique, de l'acrylonitrile, de l'acrylate de potassium, de l'acétate de vinyle, de l'ester acrylique, de l'acide méthacrylique, de l'α-méthylstyrène, de l'anhydride maléique, du vinyléthylène d'acides gras et de l'ester maléique.

3. Procédé d'enregistrement à jet d'encre selon la revendication 1 ou 2, dans lequel la composition d'encre comprend en outre une émulsion de résine.

4. Procédé d'enregistrement à jet d'encre selon l'une quelconque des revendications 1 à 3, dans lequel la composition d'encre comprend en outre un colloïde d'oxyde inorganique.

5. Procédé d'enregistrement selon la revendication 1, dans lequel le sel métallique polyvalent est un sel de l'acide nitrique ou un sel d'un acide carboxylique.

6. Procédé d'enregistrement à jet d'encre selon la revendication 1, dans lequel la solution réactive est déposée en premier sur le support d'enregistrement et la composition d'encre est ensuite déposée sur le support d'enregistrement.

7. Procédé d'enregistrement à jet d'encre selon la revendication 1, dans lequel la composition d'encre est déposée en premier sur le support d'enregistrement et la solution réactive est ensuite déposée sur le support d'enregistrement.

8. Support enregistré obtenu par le procédé selon l'une quelconque des revendications 1 à 7.
